## Europäisches Patentamt
## European Patent Office
## Office européen des brevets

(19)

(11) Numéro de publication: **0 061 979**
**B1**

(12) **FASCICULE DE BREVET EUROPEEN**

(45) Date de publication du fascicule du brevet:
**10.04.85**

(51) Int. Cl.⁴: **F 02 M 63/02**

(21) Numéro de dépôt: **82420032.3**

(22) Date de dépôt: **12.03.82**

(54) Système d'injection à pilotage de l'injecteur, pour un moteur à combustion interne.

(30) Priorité: **26.03.81 FR 8106572**

(43) Date de publication de la demande:
**06.10.82 Bulletin 82/40**

(45) Mention de la délivrance du brevet:
**10.04.85 Bulletin 85/15**

(84) Etats contractants désignés:
**AT BE CH DE GB IT LI LU NL SE**

(56) Documents cités:
**DE - A - 2 754 615**
**FR - A - 1 555 369**
**FR - A - 2 125 946**
**GB - A - 2 051 229**
**US - A - 3 443 760**

(73) Titulaire: **RENAULT VEHICULES INDUSTRIELS Société dite:, 129 Rue Servient, F-69003 Lyon (FR)**

(72) Inventeur: **Dazzi, Jean-Louis Résidence Bellevue, Bâtiment Coquelicot 52 Rue de Colonges, F-69230 Saint Genis Laval (FR)**

(74) Mandataire: **Maisonnier, Jean, 28 rue Servient, F-69003 Lyon (FR)**

ACTORUM AG

## Description

La présente invention est relative à un système d'injection destiné à équiper un moteur à combustion interne. On sait que le système d'injection a pour but de doser un combustible liquide (notamment un hydrocarbure), avant de l'envoyer sous pression dans un injecteur.

Dans les moteurs Diesel, ainsi que dans les moteur muni d'une aiguille obturatrice, laquelle se soulèque chambre de combustion est équipée d'un injecteur munid'une aiguille obturatrice, laquelle se soulève au début de chaque injection, pour se refermer sur son siège dès que l'injection est terminée.

La plupart du temps, l'aiguille de l'injecteur est soumise à la poussée d'un ressort qui tend à la repousser sur son siège, c'est-à-dire à la rappeler en position de fermeture. A chaque fois que la pompe d'injection complétée ou non par un distributeur, envoie le combustible, l'onde de pression provoque le soulèvement de l'aiguille d'injecteur. Dès que la pression devient insuffisante en fin d'injection, le ressort de rappel tend à refermer l'aiguille, et il la referme effectivement la plupart du temps. Par contre, il peut arriver que l'aiguille ait tendance à gripper dans le corps d'injecteur, si bien que la poussée de rappel du ressort devient insuffisante pour refermer l'aiguille. La communication reste alors établie entre le corps du porte-injecteur et la chambre de combustion, ce qui a pour résultat de faire tomber le moteur en panne à plus ou moins brève échéance. Cet inconvénient est particulièrement grave dans le cas d'un système d'injection à alimentation à pression constante, car alors l'injecteur grippé ouvert débiite du combustible en permanence.

On connaît, par le brevet français 1 555 369 un dispositif de sécurité destiné à équiper l'injecteur d'un moteur a combustion interne pourvu d'un aiguille normalement aminée d'un mouvement de soulèvement et de retombée, respectivement au début et à la fin de chaque injection. Une tuyauterie d'alimentation alimente l'injecteur en combustible liquide à la pression d'alimentation. Dans ce système, le piston obturateur du dispositif de sécurité est directement placé dans la canalisation d'alimentation et est actionné lors de chaque phase d'injection.

La présente invention a pour but de réaliser un système de sécurité sans moyens électriques qui coupe automatiquement l'alimentation d'un injecteur, lorsque celui-ci rest grippé en position d'ouverture et qui est seulement actionné en cas de grippage.

Un dispositif de sécurité selon l'invention, combiné avec un injecteur d'un moteur à combustion interne pourvu d'une aiguille normalement animée d'un mouvement de soulèvement et de retombée, respectivement au début et à la fin de chaque injection, tandis qu'une tuyauterie d'alimentation alimente l'injecteur en combustible liquide à la pression d'alimentation, est caractérisé en ce que des moyens distributeurs recevant le combustible à la pression d'alimentation, sont prévus sur une partie solidaire de l'aiguille d'injecteur, pour se déplacer devant un orifice fixe du porte-injecteur qui communique avec une chambre à piston obturateur pour y admettre du combustible à travers les moyens distributeurs lorsque l'aiguille d'injecteur est en position d'ouverture, cette chambre du piston étant équipée d'un piston différentiel coulissant qui, lorsque la pression dans sa chambre atteint un seuil prédéterminé, se déplace pour venir obturer l'alimentation générale de l'injecteur, un ajutage de mise à la décharge possédant une section de passage inférieure à celle de l'orifice d'alimentation étant prévu dans la chambre du piston obturateur.

Ainsi, dès que l'aiguille d'injecteur se soulève, du combustible sous pression commence à pénétrer dans la chambre du piston obturateur. Si cette admission ne dépasse pas une durée prédéterminée, définie par les moyens de temporisation, la pression dans la chambre du piston obturateur ne dépasse jamais son seuil de déclenchement, et rien ne se produit: l'injection s'effectue normalement, et elle cesse dès que l'aiguille se referme. Bien entendu, le seuil de durée défini par les moyens de temporisation est choisi pour un temps supérieur à la durée des plus longues injections prévues pour le système, afin de ne gêner en aucune façon un processus d'injection normale.

Si par contre, l'aiguille de l'injecteur a tendance à rester grippée en position ouverte, la durée s'allonge pendant laquelle du combustible sous pression est admis dans la chambre du piston obturateur. Lorsque cette durée dépasse le seuil défini par les moyens de temporisation, la pression devient suffisante derrière le piston obturateur pour le déplacer et venir automatiquement couper l'alimentation de l'injecteur en panne. Cette coupure se maintient aussi longtemps que l'aiguille d'injecteur reste grippée en position ouverte. On évite ainsi toute détérioration grave du moteur.

On peut prévoir, pour les moyens distributeurs équipant l'aiguille d'injecteur, une alimentation en combustible indépendante de l'alimentation qui assure l'injection normale du combustible.

Le dessin annexé, donné à titre d'exemple non limitatif, permettra de mieux comprendre l'invention et les avantages qu'elle procure.

Figure 1 est une vue en coupe frontale d'un injecteur de moteur Diesel équipé selon l'invention.

Figure 2 est une coupe suivant II/II (figure 1).

Figure 3 est une coupe en plan suivant III/III (figure 2).

Figure 4 est une coupe analogue à la figure 2, montrant la position des organes pendant une injection normale.

Figure 5 est une vue analogue aux figures 2 et 4 montrant la position des organes en position d'incident, l'aiguille d'injecteur étant grippée et en position ouverte.

On a représenté sur le dessin, l'ensemble d'un injecteur et d'un porte-injecteur pour moteur Diesel, équipé d'un dispositif selon l'invention.

A l'intérieur d'un porte-injecteur 1, se trouve à la manière connue, un injecteur 2 dont l'extrémité comporte des orifices d'injection 3.

Derrière ces orifices 3, se trouve un siège d'étanchéité non représenté, sur lequel peut venir porter, à la manière connue, l'extrémité d'une aiguille d'injecteur 4. La queue 5 de l'aiguille d'injecteur 4 reçoit un embout 6 derrière lequel prend appui un ressort de rappel taré 7. L'embout 6 fait partie d'un poussoir 8 qui, selon l'invention, présente une partie cylindrique arrière 9 jouant le rôle d'un distributeur hydraulique.

Pendant le fonctionnement du moteur, l'aiguille 4 se soulève à chaque injection, et il en résulte pour le tiroir 9, un mouvement alternatif de coulissement dans un corps de distributeur fixe 10. Le jeu entre le tiroir 9 et le corps 10 correspond à des tolérances d'usinage courantes sur les systèmes d'injection, pour assurer une étanchéité satisfaisante au liquide combustible lorsque celui-ci est à la pression habituelle.

Le tiroir distributeur 9 comporte une gorge 11 qui est susceptible de se déplacer devant un orifice fixe 12 qui possède une section de passage de valeur $S$. Cet orifice 12 est pratiqué dans le corps 10 et il communique avec une chambre cylindrique 13, dans laquelle peut coulisser de façon étanche, un piston différentiel comportant une grande section 14 et une petite section 15. Le corps à grosse section 14 de ce piston 14, 15 coulisse dans la chambre cylindrique 13 entre un ressort de rappel 16 et une poussée antagoniste provenant du combustible admis par l'orifice 12.

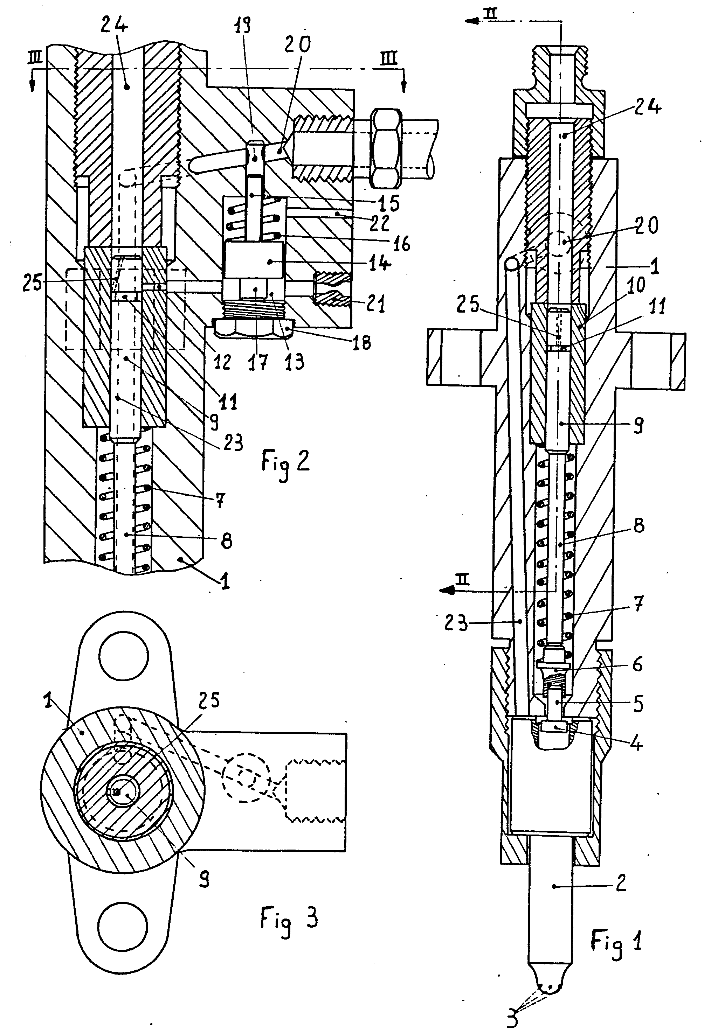

Lorsque la pression dans la chambre 13 est faible ou nulle, le piston 14 occupe la position de repos illustrée sur la figure 2, c'est-à-dire qu'une butée arrière 17 dont il est pourvu, reste en appui contre le fond de la chambre 13, matérialisé par un bouchon vissé 18.

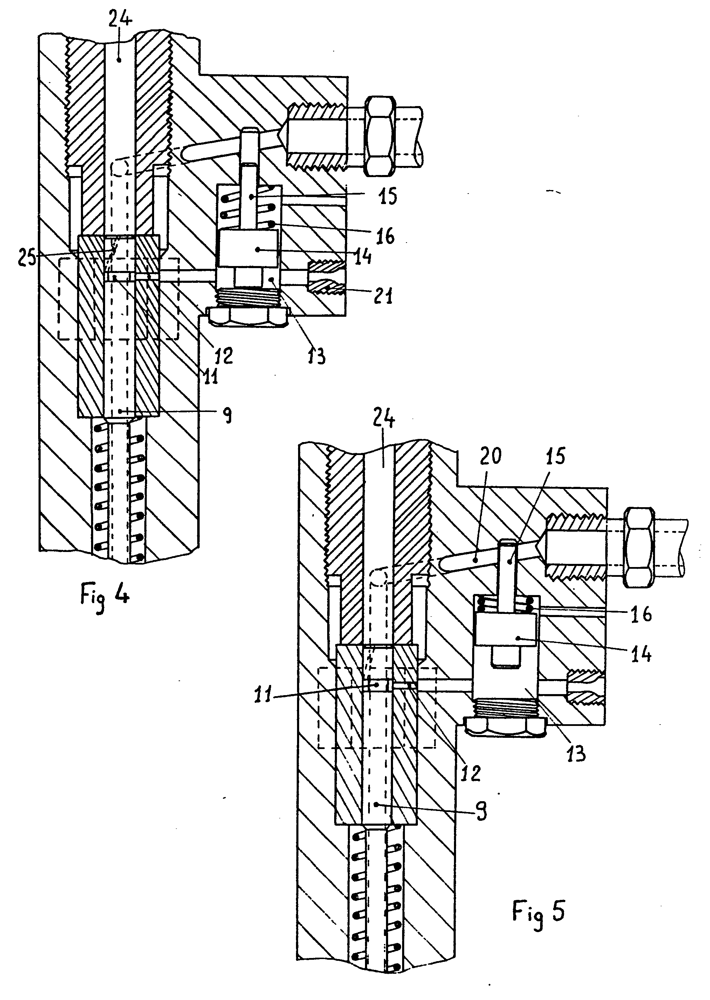

A l'avant du piston 14, 15, la petite section 15 est celle d'une tige cylindrique coulissant de façon étanche dans un alésage cylindrique fixe 19. Ce dernier est disposé en travers d'un canal d'alimentation 20 que la petite section 15 vient obturer complètement lorsque le piston différentiel 14, 15 occupe la position soulevée illustrée sur la figure 5.

Un ajutage 21 à section calibrée $s$ relie par ailleurs la chambre 13 à un circuit de décharge non représenté qui renvoie le combustible au réservoir.

Par ailleurs, la chambre située autour du ressort de rappel 16 est reliée, elle aussi, par un orifice de fuite 22, au circuit de décharge renvoyant le combustible au réservoir.

Le canal 20 reçoit, à la manière connue, le débit principal de combustible provenant de la pompe à haute pression du circuit d'injection.

Ce canal 20 communique, à la manière habituelle, par des perçages tels que 23 prévus dans le corps du porte-injecteur 1, avec la chambre d'injection non représentée qui se trouve derrière le siège d'étanchéité, à l'extrémité de l'aiguille 4, pour injecter le combustible dans le moteur par les orifices 3, dès que l'aiguille 4 se soulève.

Par ailleurs, la partie arrière du porte-injecteur 1 comporte un perçage axial 24 recevant, d'un distributeur hydraulique, du combustible envoyé sous une pression modulée à la façon connue. On rappellera que, sur ces systèmes connus:

— lorsque le combustible situé en 24 est à haute pression, son action sur la section du distributeur 9 l'emporte, et maintient fermée l'aiguille 4, à l'encontre de la pression antagoniste dans les canalisations 20 et 23;

— au contraire, lorsque la pression en 24 chute, c'est la pression en 20 et 23 qui devient prépondérante et soulève l'aiguille 4, provoquant ainsi le début d'injection par les orifices 3.

Sur l'arrière du tiroir distributeur 9, on prévoit un perçage 25 qui met en communication la gorge 11 avec le perçage axial 24.

L'ensemble des deux orifices calibrés 12 (section $S$), et 21 (section $s$) constitue un moyen temporisateur pour le fonctionnement duquel, on confère à $S$, une valeur supérieure à celle de $s$.

Le fonctionnement est le suivant:

En position de repos, c'est-à-dire entre deux injections, le dispositif occupe la position illustrée sur les figures 1 et 2. La gorge 11 du distributeur 9 se trouve décalée par rapport à l'orifice 12. Par conséquent, la pression régnant en 24 ne parvient pas jusqu'à la chambre 13 du piston différentiel 14, 15. Cette chambre 13 est maintenue à la pression de décharge par l'ajutage 21. Le piston différentiel 14, 15, est soumis à la seule poussée de son ressort 16, et sa butée 17 reste en appui contre le fond du bouchon 18. Dans ces conditions, le canal d'alimentation 20 n'est pas obturé, et le combustible sous haute pression (par exemple aux environs de 1000 bars) alimente en permanence la canalisation 23. Celle-ci reste prête à provoquer le soulèvement de l'aiguille 4 et à déclencher un débit d'injection dès qu'une baisse de pression sera provoquée volontairement dans le perçage 24.

Pendant une injection normale, c'est-à-dire à la suite d'une chute de la pression du combustible dans le perçage axial 24, l'aiguille 4 se soulève et l'ensemble occupe la position illustrée sur la figure 4. La gorge 11 du tiroir distributeur 9 vient en coïncidence avec l'orifice calibré 12. Ce dernier est désormais alimenté en combustible sous haute pression à partir du perçage axial 24, dans l'intermédiaire du perçage 25.

La pression monte dans la chambre 13, étant donné que la section de passage $S$ de l'orifice d'alimentation 12 est supérieure à la surface $s$ de l'ajutage de fuite 21. La loi de cette montée en pression dans la chambre 13 en fonction du temps peut être définie à volonté par le choix initial de la valeur relative des sections $S$ et $s$. Les valeurs respectives de $S$ et de $s$ sont choisies de façon que la montée en pression dans la chambre 13 du piston différentiel 14, 15, soit suffisamment lente pour ne pas devenir prépondérante par rapport à la poussée de tarage du ressort 16, pendant une durée au moins égale à la plus longue durée possible d'une injection, selon les diverses conditions possibles de fonctionnement du moteur.

Dans ces conditions, on comprend que le piston différentiel 14, 15, reste constamment immobile à la position illustrée sur la figure 4, tant que l'aiguille 4 de l'injecteur fonctionne de façon normale. En effet, à chaque début d'injection, l'aiguille 4 se soulève, la gorge 11 vient en coïncidence avec l'orifice 12, et la pression commence à monter dans la chambre 13. Cependant, avant que cette pression n'ait suffisamment monté pour écraser le ressort 16 et déplacer le piston obturateur 14, 15, l'injection s'est terminée, et l'aiguille 4 est retombée sur son siège, la lorge 11 revenant à la position de la figure 2, ce qui coupe l'alimentation de l'orifice 12. La chambre 13 cessant désormais d'être alimentée, alors que l'ajutage 21 la relie à la décharge, sa pression retombe et le piston différentiel 14, 15, reste immobile.

C'est seulement en cas d'incident (figure 5) que le système fonctionne. En effet, l'aiguille 4 s'étant soulevée lors d'une injection (ce qui amène la gorge 11 en coïncidence avec l'orifice 12), on suppose que l'aiguille 4 reste grippé ouverte dans son injecteur 2. Dans ces conditions, le ressort 7 est impuissant à la faire retomber sur son siège et le distributeur 9 reste immobilisé à la position de la figure 5. Dans ces conditions, comme expliqué précédemment, la pression monte dans la chambre 13, mais, la communication 11 12, restant indéfiniment établie, cette pression atteint une valeur dépassant le seuil défini par le tarage du ressort 16. Dès qu'elle dépasse ce seuil, sa poussée devient prépondérante et le piston différentiel 14, 15 écrase le ressort 16 jusqu'à la position illustrée sur la figure 5. Dans ce cas, la tige à petite section 15 du piston différentiel vient obturer complètement la canalisation 20 assurant l'alimentation de l'injecteur 2. Par conséquent, tant que l'aiguille 4 reste ouverte, l'alimentation en combustible cesse par les canalisations 20, 23. On supprime ainsi l'incident qui, sur un moteur classique, aurait conduit l'injecteur 2 à débiter en permanence du combustible dans le moteur.

**Revendications**

1. Dispositif de sécurité, combiné avec un injecteur d'un moteur à combustion interne pourvu d'une aiguille normalement animée d'un mouvement de soulèvement et de retombée, respectivement au début et à la fin de chaque injection, tandis qu'une tuyauterie d'alimentation alimente l'injecteur en combustible liquide à la pression d'alimentation, caractérisé en ce que des moyens distributeurs recevant le combustible à haute pression, sont prévus sur une partie solidaire de l'aiguille d'injecteur (4) pour se déplacer devant un orifice fixe du porte-injecteur (1) qui communique avec une chambre (13) à piston obturateur pour y admettre du combustible à travers les moyens distributeurs lorsque l'aiguille d'injecteur est en position d'ouverture, cette chambre du piston étant équipée d'un piston différentiel (14, 15) coulissant qui, lorsque la pression dans sa chambre (13) atteint un seuil prédéterminé, se déplace pour venir obturer l'alimentation générale de l'injecteur (2), un ajutage de mise à la décharge (21) possédant une section de passage inférieure à celle de l'orifice d'alimentation (12) étant prévu dans la chambre (13) du piston obturateur.

2. Dispositif de sécurité d'injection suivant la revendication 1, caractérisé en ce que la partie solidaire d'aiguille d'injecteur (4) est constituée par un tiroir coulissant (9) prévu sur l'extrémité arrière d'un poussoir (8) qu'un ressort de rappel (7) maintient appliqué sur la queue (5) de l'aiguille (4).

3. Dispositif de sécurité d'injection suivant la revendication 2, caractérisé en ce que le tiroir distributeur (9) solidaire de l'aiguille d'injecteur (4), coulisse de façon étanche dans un corps de distributeur (10) percé d'un orifice calibré (12) qui est relié à la chambre (13) du piston obturateur, tandis que sur le tiroir distributeur (9) est creusée une gorge (11) qui vient en coïncidence avec l'orifice d'alimentation (12) quand l'aiguille d'injecteur (4) est soulevée, cette gorge (11) communiquant en permanence par un perçage (25) du tiroir (9), avec une chambre (24) contenant du combustible sous pression.

4. Dispositif de sécurité d'injection suivant l'une quelconque des revendications précédentes, caractérisé en ce que le piston obturateur (14, 15) est un piston différentiel dont la grande section (14) est soumise à la poussée dans la chambre (13) et à la poussée antagoniste d'un ressort taré (16), tandis qu'une tige cylindrique de sa petite section (15) coulisse de façon étanche dans un alésage cylindrique (19) qui croise la canalisation (20) assurant l'alimentation en combustible de l'injecteur (2), cette canalisation (20) étant ainsi complètement obturée par la petite section (15) lorsque le piston différentiel (14, 15), est déplacé à l'encontre de son ressort (16).

5. Dispositif de sécurité d'injection suivant l'une quelconque des revendications précédentes, caractérisé en ce que le piston différentiel (14, 15), possède, derrière sa grosse section (14), une butée (17) susceptible de venir en appui sur le fond de la chambre (13) sous la seule poussée de son ressort de rappel (16).

6. Dispositif de sécurité d'injection suivant l'une quelconque des revendications précédentes, caractérisé en ce que la chambre située autour du ressort de rappel (16) du piston différentiel (14, 15), est reliée en permanence au circuit de décharge, par une canalisation (22).

7. Dispositif de sécurité d'injection suivant l'une quelconque des revendications précédentes, caractérisé en ce que la chambre (13) contenant le piston différentiel (14, 15), ainsi que son ressort (16), est usinée directement dans le corps du porte-injecteur (1).

8. Dispositif de sécurité d'injection suivant la revendication 7, caractérisé en ce que le fond de la chambre (13) susceptible de recevoir la butée (17) du piston différentiel (14, 15), est constitué par un bouchon (18) vissé dans le corps du porte-injecteur (1).

**Patentansprüche**

1. Sicherheitsvorrichtung zum Ausrüsten des Injektors eines Brennkraftmotors, mit einer normalerweise einer Hebe- und Absenkbewegung zu Beginn bzw. am Ende einer jeden Einspritzung unterworfenen Nadel, während eine Speiseverrohrung den Injektor mit fliessfähigem Brennstoff unter Speisedruck versorgt, dadurch gekennzeichnet, dass Verteilermittel vorgesehen sind, die den Kraftstoff unter Speisedruck aufnehmen, und die an einem festen Teil der Injektornadel (4) vorgesehen sind, um sich vor einer festen Bohrung des Injektorgehäuses (1) zu verschieben, die ihrerseits mit einer Kammer (13) eines Absperrkolbens kommunizieren, um dort den Zutritt von Brennstoff über Verteilermittel zu erlauben, während sich die Injektornadel in Öffnungsposition befindet, dass die Kammer des Kolbens mit einem gleitenden Differentialkolben (13, 14) ausgerüstet ist, während der Druck in der Kammer (13) einen vorbestimmten Schwellenwert erreicht und sich verschiebt, um die allgemeine Zufuhr zum Injektor (2) abzusperren, und dass eine Abgadedüse (21) vorgesehen ist, die einen Durchtrittsquerschnitt aufweist, der kleiner als jener der Speisebohrung (12) ist und der in der Kammer (13) des Absperrkolbens vorgesehen ist.

2. Einspritz-Sicherheitsvorrichtung gemäss Anspruch 1, dadurch gekennzeichnet, dass der feste Teil der Injektornadel aus einem gleitenden Schieber (9) besteht, der am hinteren Ende eines Stössels (8) vorgesehen ist, den eine Rückholfeder gegen den rückwärtigen Teil (5) der Nadel (4) andrückt.

3. Sicherheits-Einspritzvorrichtung gemäss den Ansprüchen 1 und 2, dadurch gekennzeichnet, dass der mit der Einspritznadel (4) fest verbundene Verteilungsschieber (9) in einem Verteilergehäuse (10) dichtend gleitet und von einer kalibrierten Bohrung (12) durchdrungen ist, die an die Kammer (13) des Absperrkolbens angeschlossen ist, während der Verteilerschieber (9) eine Nut (11) aufweist, die dann mit der Speisebohrung (12) zur Überdeckung kommt, wenn die Injektornadel (4) angehoben ist und die über eine Bohrung (25) des Schiebers (9) ständig mit einer Kammer (24) kommuniziert, welche unter Druck stehenden Brennstoff enthält.

4. Sicherheits-Einspritzvorrichtung nach einem der vorausgegangenen Ansprüche, dadurch gekennzeichnet, dass der Absperrkolben (14, 15) ein Differentialkolben ist, dessen grosser Querschnitt (14) dem Druck der Kammer (13) sowie dem Gegendruck einer tarierten Feder (16) ausgesetzt ist, während die zylindrische Stange seines kleinen Querschnittes (15) in dichtender Weise in einer zylindrischen Bohrung (19) gleitet, die den Kanal (20) durchkreuzt, welcher dem Injektor (2) Brennstoff zuführt und welcher dann von dem kleinen Querschnitt (15) vollkommen abgesperrt ist, wenn der Differentialkolben (14, 15) entgegen seiner Feder (16) verschoben ist.

5. Sicherheits-Einspritzvorrichtung nach einem der vorausgegangenen Ansprüche, dadurch gekennzeichnet, dass der Differentialkolben (14, 15) hinter seinem grossen Querschnitt (14) einen Anschlag (17) aufweist, der sich am Boden der Kammer (13) alleine unter der Kraft seiner Rückholfeder (16) anzulegen vermag.

6. Sicherheits-Einspritzvorrichtung nach einem der vorausgegangenen Ansprüche, dadurch gekennzeichnet, dass die die Rückholfeder (16) des Differentialkolbens (14, 15) umgebende Kammer über einen Kanal (22) ständig an den Abgabekreis angeschlossen ist.

7. Sicherheits-Einspritzvorrichtung nach einem der vorausgegangenen Ansprüche, dadurch gekennzeichnet, dass die Kammer (13), die den Differentialkolben (14, 15) sowie seine Feder (16) enthält, unmittelbar in das Gehäuse des Injektorträgers (1) eingearbeitet ist.

8. Sicherheits-Einspritzvorrichtung nach Anspruch 7, dadurch gekennzeichnet, dass der Boden der Kammer (13), der den Anschlag (17) des Differentialkolbens (14,15) aufzunehmen vermag, aus einem in das Gehäuse des Injektorträgers (1) eingeschraubten Stopfen (18) gebildet ist.

## Claims

1. A safety device intended for fitting to the injector of an internal combustion engine provided with a needle normally operated with a rising and falling motion, respectively at the beginning and at the end of each injector, whilst a feed pipe supplies the injector with liquid fuel at the feed pressure and characterised in that means of distribution which receive the fuel at the feed pressure are provided on an integral part of the injection needle (4) so as to move opposite a fixed opening in the injector carrier (1) which communicates with a chamber (13) which has a blocking piston to allow fuel through the distribution means when the injector needle is in the open position, this piston chamber being fitted with a sliding differential piston (14, 15) which, when the pressure in the chamber (13) reaches a predetermined threshold, moves so as to block the general feed of the injector (2), a discharge nozzle (21), which has a passage section smaller than that of the feed opening (12), being provided in the chamber (13) of the blocking piston.

2. An injection safety device according to Claim 1, characterised in that the integral part of the injector (4) is constituted by a slide valve (9) provided on the rear end of a push rod (8) which a return spring (7) holds pressed on the rear (5) of the needle (4).

3. An injection safety device according to Claims 1 and 2, characterised in that the slide valve (9) integral with the injector needle (4) slides, forming a seal, in the distributor body (10) pierced with a calibrated opening (12) which is connected to the chamber (13) of the blocking piston, whilst the distributor slide valve (9) has a groove (11) which comes to coincide with the feed opening (12) when the injection needle (4) is raised, this groove (11) permanently communicating through a drilling (25) in the slide valve (9) with a chamber (24) which contains fuel under pressure.

4. An injection safety device according to any one of the preceding claims, characterised in that the blocking piston (14, 15) is a differential piston of which the large section (14) is subject to the pressure in the chamber (13) and to the opposing thrust of a calibrated spring (16), whilst the cylindrical stem of its small section (15) slides forming a seal in a cylindrical bore (19) which cuts the channel (20) carrying the fuel feed of the injector (2), this channel (20) thus being completely blocked by the small section (15) when the differential piston (14, 15) is displaced against its spring (16).

5. An injection safety device according to any one of the preceding claims, characterised in that the differential piston (14, 15) has below its large section (14) a stop (17) with can come to bear on the bottom of the chamber (13) when subject only to the thrust of its return spring (16).

6. An injection safety device according to any one of the preceding claims, characterised in that the chamber lying around the return spring (16) of the differential piston (14, 15) is permanently connected to the discharge circuit by a channel (22).

7.  An injection safety device according to any one of the preceding claims, characterised in that the chamber (13) which contains the differential piston (14, 15), as well as its spring (16), is machined directly into the body of the injector carrier (1).

8.  An injection safety device according to Claim 7, characterised in that the bottom of the chamber (13) which is able to receive the stop (17) of the differential piston (14, 15) is constituted by a plug (18) screwed into the body of the injector carrier (1).

0 061 979

Fig 1

Fig 2

Fig 3

Fig 4

Fig 5